# EUROPEAN PATENT APPLICATION

(11) **EP 4 083 132 A1**
(43) Date of publication of application: **02.11.2022**
(21) Application number: 21202470.7
(22) Date of filing: 13.10.2021
(51) Int. Cl.: C08L 9/00, C08K 3/016, C08J 3/22, C08K 5/00

(54) **COMPOSITE FLAME RETARDANT, FLAME-RETARDANT VIBRATION-DAMPING RUBBER WITH EXCELLENT COMPREHENSIVE PERFORMANCE, AND PREPARATION METHODS THEREOF**

(30) Priority: 28.04.2021 CN 202110468282
(71) Applicant: Zhuzhou Times New Material Technology Co., Ltd, Tianyuan District Zhuzhou Hunan 412007 (CN)
(72) Inventor: YANG, Jun, Hunan, 41200 (CN); TAN, Lianying, Hunan, 41200 (CN); WU, Lingling, Hunan, 41200 (CN); YANG, Ruimeng, Hunan, 41200 (CN); CHENG, Zhi, Hunan, 41200 (CN); WANG, Xuefei, Hunan, 41200 (CN); WANG, Jin, Hunan, 41200 (CN); LIU, Quan, Hunan, 41200 (CN); MU, Hongshuai, Hunan, 41200 (CN); XIAO, Chengyuan, Hunan, 41200 (CN)
(74) Representative: Lapienis, Juozas

(57) **Abstract**

The present disclosure provides a composite flame retardant, a flame-retardant vibration-damping rubber with excellent comprehensive performance, and preparation methods thereof. Main components of the composite flame retardant include a rubber, a solid flame retardant, and a liquid flame retardant; the composite flame retardant further includes a flame-retardant modifier; the flame-retardant modifier is a diene-based liquid rubber containing one or more functional groups from the group consisting of an isocyanate group, an epoxy group, and a trialkoxysilylpropyl group; and the diene-based liquid rubber includes at least one from the group consisting of a butadiene-based rubber, a chlorobutadiene-based rubber, an isoprene-based rubber, a 1,3-piperlene-based rubber, and a cyclopentadiene-based rubber. In the composite flame retardant of the present disclosure, the flame-retardant modifier can react with the flame retardant and the rubber to enhance the bonding between the flame retardant and the rubber and improve the dispersion of the flame retardant in the rubber matrix. The composite flame retardant shows a strong binding ability to a rubber, can fully realize a flame-retardant effect in a rubber, and can also improve the mechanical properties, low-temperature performance, heat generation performance, and fatigue resistance of a flame-retardant vibration-damping rubber compound.

## Description

### TECHNICAL FIELD

The present disclosure belongs to the field of flame retardants, and in particular relates to a composite flame retardant, a flame-retardant vibration-damping rubber with excellent comprehensive performance, and preparation methods thereof.

### BACKGROUND

At present, in the rubber industry, a flame retardant is usually added into a rubber through mechanical mixing to improve the flame retardancy of the rubber. In order to make rubbers and rubber products meet the increasingly stringent flame retardant requirements, such as maximum average heat release rate (*MARHE*)*,* smoke density (*Dₛ*), and smoke toxicity (*CIT*) requirements of EN45545-2 R9: Fire Protection of Railway Vehicles, a flame retardant usually needs to be added into a rubber compound in a large amount. This often leads to decreased mechanical properties and fatigue resistance and increased heat generation and creep deformation of the rubber compound, thus seriously affecting the function and use of rubber products.

Flame retardants include inorganic flame retardants and organic flame retardants. The inorganic flame retardants mainly include silicates such as StronWiTM, talcum powder, and nano-montmorillonite (MMT), and the organic flame retardants mainly include organic nitrogen-phosphorous flame retardants, polyhedral oligomeric silsesquioxanes (POSS), and the like. Most flame retardants have weak interaction with rubbers and are not easy to disperse in rubber compounds, such that their flame-retardant effects cannot be fully realized. In order to make rubber and products thereof reach an ideal flame-retardant grade, a variety of flame retardants are generally compounded into a composite flame retardant. A composite flame retardant is obtained by compounding two or more flame retardants and/or other materials, which has higher flame retardancy than a single type of flame retardant and thus is widely used in flame-retardant rubber products. However, common composite flame retardants have poor compatibility with rubbers and will heavily damage the performance of rubbers and products thereof.

Therefore, it is of great significance to improve the compatibility of a composite flame retardant with rubbers and reduce the damage of the composite flame retardant to the performance of a rubber compound.

### SUMMARY

The technical problem to be solved by the present disclosure is that common composite flame retardants have poor compatibility with rubber and will heavily damage the performance of rubbers and products thereof. In order to overcome the shortcomings and defects mentioned in the above background art, the present disclosure provides a composite flame retardant, a flame-retardant vibration-damping rubber with excellent comprehensive performance, and preparation methods thereof. The composite flame retardant added with a flame-retardant modifier has excellent compatibility with rubbers and will cause little damage to the performance of a rubber compound. When the composite flame retardant is used in a vibration-damping rubber compound, a resulting vibration-damping rubber has excellent performance.

In order to solve the above technical problem, the present disclosure provides the following technical solutions.

A composite flame retardant is provided, where main components of the composite flame retardant include a rubber, a solid flame retardant, and a liquid flame retardant; the composite flame retardant further includes a flame-retardant modifier; the flame-retardant modifier is a diene-based liquid rubber containing one or more functional groups from the group consisting of an isocyanate group, an epoxy group, and a trialkoxysilylpropyl group; and the diene-based liquid rubber includes at least one from the group consisting of a butadiene-based rubber, a chlorobutadiene-based rubber, an isoprene-based rubber, a 1,3-piperlene-based rubber, and a cyclopentadiene-based rubber.

The main components includes both a solid flame retardant and a liquid flame retardant, where the solid flame retardant guarantees the flame-retardant effect and the liquid flame retardant can improve the processability without compromising the flame retardancy.

The functional groups contained in the functionalized diene-based liquid rubber molecules of the present disclosure, such as isocyanate group, epoxy group, and triethoxysilylpropyl group, can interact with oxygen-containing functional groups such as hydroxyl and carboxyl and amino in the flame retardant molecules under heating to form covalent bonds and/or hydrogen bonds, which provide a strong binding force between the flame-retardant modifier and the flame retardant, thereby achieving the modification for the flame retardant.

Preferably, the flame-retardant modifier may include at least one from the group consisting of single-end triethoxysilylpropyl-functionalized liquid polybutadiene, double-end triethoxysilylpropyl-functionalized liquid polybutadiene, triethoxysilylpropyl-trifunctionalized liquid polybutadiene, epoxidized liquid polybutadiene, and double-end isocyanate-functionalized liquid polybutadiene.

Diene chain segments in functionalized diene-based liquid rubber molecules have prominent compatibility with a rubber and can participate in a vulcanization reaction of a rubber to modify the rubber, and thus a resulting rubber product has large performance advantages. Butadiene-based products are currently available on the market and can be purchased directly without synthesis, which are easy to obtain.

For the above-mentioned composite flame retardant, preferably, the rubber may include a cis-polybutadiene rubber and/or a *trans*-poly(butadiene-co-isoprene) rubber. The *cis*-polybutadiene rubber and *trans*-poly(butadiene-*co*-isoprene) rubber used in the composite flame retardant have prominent compatibility and co-vulcanization characteristics with the crude rubber such as natural rubber in the formulation of the vibration-damping rubber, and the *cis*-polybutadiene rubber can also improve the low-temperature performance of a rubber compound.

Preferably, the rubber may include both a *cis*-polybutadiene rubber and a *trans*-poly(butadiene-*co*-isoprene) rubber; and a mass ratio of the *cis*-polybutadiene rubber to the *trans*-poly(butadiene-*co*-isoprene) rubber may be preferably (60-95):(5-40) and more preferably (70-90):(10-30).

A ratio of *cis*-polybutadiene rubber to *trans*-poly(butadiene-*co*-isoprene) rubber in the composite flame retardant will affect the compatibility of the composite flame retardant with a vibration-damping rubber compound, and the mechanical properties, low-temperature performance, and the like of the vibration-damping rubber compound. Within the above mass ratio range, the compatibility of the composite flame retardant with a vibration-damping rubber compound, and the mechanical properties, low-temperature performance, and the like of the rubber compound are the optimal.

For the above-mentioned composite flame retardant, preferably, the solid flame retardant may include at least one from the group consisting of a smoke suppressant, a char-forming agent, and a nitrogen-phosphorous flame retardant. The smoke suppressant may be a silicate, including at least one from the group consisting of StronWiTM, talcum powder, and nano-MMT; the char-forming agent may include POSS and/or graphene oxide (GO); and the nitrogen-phosphorous flame retardant may include aluminum diethyl phosphite and/or melamine pyrophosphate (MPP).

More preferably, the solid flame retardant may include a smoke suppressant, a char-forming agent, and a nitrogen-phosphorous flame retardant.

A mass ratio of the smoke suppressant in the solid flame retardant to the rubber may be preferably (5-100): 100 and more preferably (30-80): 100. A mass ratio of the char-forming agent in the solid flame retardant to the rubber may be preferably (2-20): 100 and more preferably (5-15): 100. A mass ratio of the nitrogen-phosphorous flame retardant in the solid flame retardant to the rubber may be preferably (5-40): 100 and more preferably (5-30): 100.

A mass ratio of aluminum diethyl phosphite to MPP in the nitrogen-phosphorous flame retardant may be preferably (1.8-2.2): 1 and more preferably 2:1.

For the above-mentioned composite flame retardant, preferably, the liquid flame retardant may include at least one from the group consisting of trioctyl phosphate (TOP), tetrabromophthalic anhydride, and *m*/*p*-cresyl diphenyl phosphate (CDP). The above three liquid flame retardants are selected according to the characteristics of the composite flame retardant of the present disclosure, such that the composite flame retardant has the optimal flame-retardant effect.

For the above-mentioned composite flame retardant, a mass ratio of the solid flame retardant to the rubber may be preferably (12-160): 100 and more preferably (40-125): 100; a mass ratio of the liquid flame retardant to the rubber may be preferably (1-30): 100 and more preferably (5-20): 100; and a mass ratio of the flame-retardant modifier to the solid flame retardant may be preferably (1-25):100 and more preferably (3-15):100.

As a general inventive concept, the present disclosure also provides a preparation method of the composite flame retardant, including: adding the solid flame retardant, the liquid flame retardant, and the flame-retardant modifier to the rubber, and subjecting a resulting mixture to high-temperature compounding at 130°C to 170°C for 2 min to 30 min.

A compounding device used in the above preparation method may preferably be at least one from the group consisting of an open mill, an internal mixer, a single-screw extruder, and a twin-screw extruder.

As a general inventive concept, the present disclosure also provides a flame-retardant vibration-damping rubber with excellent comprehensive performance, where a formulation of the flame-retardant vibration-damping rubber includes a crude rubber, the composite flame retardant described above, a reinforcing filler, an active agent, an anti-aging agent, an accelerating agent, and a vulcanizing agent.

Preferably, the crude rubber may include a natural rubber, a styrene-butadiene rubber, a butadiene rubber, an isoprene rubber, an ethylene-propylene rubber, a chloroprene rubber, a butyronitrile rubber, a butyl rubber, a silicone rubber, a fluoro rubber, a polyurethane rubber, a chlorohydrin rubber, a polysulfide rubber, an acrylate rubber, or a reclaimed rubber of any variety and specification, or a combined rubber thereof in different proportions; the reinforcing filler may include carbon black and/or white carbon black, the carbon black may include N100 series, N200 series, N300 series, N400 series, N500 series, N600 series, N700 series, N800 series, N900 series, channel replacement furnace black, gas channel black, or gas-mixture carbon black of any variety and specification, or a combined mixture thereof in different proportions, and the white carbon black may include precipitated silica and/or fumed silica of any variety and specification; and the active agent, the anti-aging agent, the accelerating agent, and the vulcanizing agent may be conventional agents.

A mass ratio of the composite flame retardant to the crude rubber may be preferably (40-120):100 and more preferably (50-100):100; and a mass ratio of the reinforcing filler to the crude rubber may be preferably (2-50):100 and more preferably (5-45):100. Other functional additives can be selectively added with reference to a conventional proportion range.

The proportions of the composite flame retardant, the crude rubber, and the reinforcing filler are very important. The proportions of the active agent, the anti-aging agent, the accelerating agent, and the vulcanizing agent vary according to a type of the crude rubber and a vibration-damping formulation.

Under the same technical concept, the present disclosure also provides a preparation method of the flame-retardant vibration-damping rubber, including the following steps:
(1) adding the rubber and the composite flame retardant to a compounding machine, and compounding at 50°C to 90°C;
(2) adding the reinforcing filler, the active agent, and the anti-aging agent, and further compounding at 50°C to 130°C; and
(3) cooling a rubber compound to 50°C to 60°C, adding the accelerating agent and the vulcanizing agent and compounding at 50°C to 100°C, and discharging the rubber compound.

In the composite flame retardant of the present disclosure, the flame-retardant modifier establishes a covalent bond and/or a hydrogen bond (namely, "bridge bond") between the flame retardant and the rubber to enhance the bonding between the flame retardant and the rubber and improve the dispersion of the flame retardant in the rubber matrix, thereby fully realizing the flame-retardant effect of the flame retardant for the rubber with reduced damage to the performance of the rubber compound.

If the composite flame retardant does not include the rubber, the composite flame retardant will have poor compatibility with the crude rubber in the vibration-damping rubber formulation; if the composite flame retardant does not include the flame-retardant modifier, the flame retardant and the rubber cannot be modified and there will be weak bonding between the flame retardant and the rubber, both of which will cause poor dispersion of the flame retardant in the crude rubber and unsatisfactory flame retardancy; and if the composite flame retardant does not include the flame retardant, a flame retardant needs to be additionally added in a large amount to the vibration-damping rubber formulation to meet the flame retardant requirements, which will damage the performance of the rubber compound. In the above three cases, a covalent bond and/or a hydrogen bond cannot be formed between the flame retardant and the rubber, and thus the damage to the performance of a rubber compound cannot be reduced by improving the compatibility between the flame retardant and the rubber.

Compared with the prior art, the present disclosure has the following beneficial effects.

(1) The flame-retardant modifier in the present disclosure can react with the flame retardant and the rubber to establish a "bridge bond" between the flame retardant and the rubber, which enhances the bonding between the flame retardant and the rubber and improves the dispersion of the flame retardant in the rubber matrix, thereby greatly improving the flame retardancy of the composite flame retardant.

(2) The composite flame retardant of the present disclosure shows a strong binding ability to a rubber, can fully realize a flame-retardant effect in a rubber, and can significantly improve the mechanical properties, low-temperature performance, heat generation performance, and fatigue resistance of a flame-retardant vibration-damping rubber compound when used in a vibration-damping rubber.

(3) The composite flame retardant is prepared through a high-temperature compounding process, and the vibration-damping rubber is prepared through a conventional compounding process. The flame retardant and the rubber are modified during the compounding and vulcanization processes. The processes are simple and devices involved have high universality. Therefore, the present disclosure has high market application values in the rubber industry.

### BRIEF DESCRIPTION OF THE DRAWINGS

To describe the technical solutions in examples of the present disclosure or in the prior art more clearly, the accompanying drawings required for describing the examples or the prior art will be briefly described below. Apparently, the accompanying drawings in the following description show some examples of the present disclosure, and a person of ordinary skill in the art may still derive other drawings from these accompanying drawings without creative efforts.
FIG. 1 is an infrared spectrum of the composite flame retardant A provided in Example 1.
FIG. 2 is an infrared spectrum of the composite flame retardant D provided in Example 4.

### DETAILED DESCRIPTION

In order to facilitate the understanding of the present disclosure, the present disclosure will be described in detail below with reference to the preferred examples, but the protection scope of the present disclosure is not limited to the following specific examples.

Unless otherwise defined, all technical terms used hereinafter have the same meaning as commonly understood by those skilled in the art. The technical terms used herein are merely for the purpose of describing specific examples, and are not intended to limit the protection scope of the present disclosure.

Unless otherwise specified, various raw materials, reagents, instruments, equipment, and the like used in the present disclosure can be purchased from the market or can be prepared by existing methods.

### Example 1:

A composite flame retardant of the present disclosure was provided, including the following components, in parts by mass: 75 parts of *cis*-polybutadiene rubber, 25 parts of *trans*-poly(butadiene-*co*-isoprene) rubber, 10 parts of double-end triethoxysilylpropyl-functionalized liquid polybutadiene, 20 parts of StronWiTM, 15 parts of talcum powder, 30 parts of nano-MMT, 5 parts of GO, 20 parts of aluminum diethyl phosphite, 10 parts of MPP, and 10 parts of TOP.

The composite flame retardant in this example was prepared as follows: the *cis*-polybutadiene rubber and the *trans*-poly(butadiene-*co*-isoprene) rubber were thoroughly compounded at 40°C to 80°C in an internal mixer according to the above mass ratio; then the StronWiTM, talcum powder, nano-MMT, GO, aluminum diethyl phosphite, MPP, TOP, and double-end triethoxysilylpropyl-functionalized liquid polybutadiene were added, and compounding was further conducted at 160°C to 170°C for 5 min; and a resulting product was discharged and cooled to obtain the composite flame retardant, which was named composite flame retardant A.

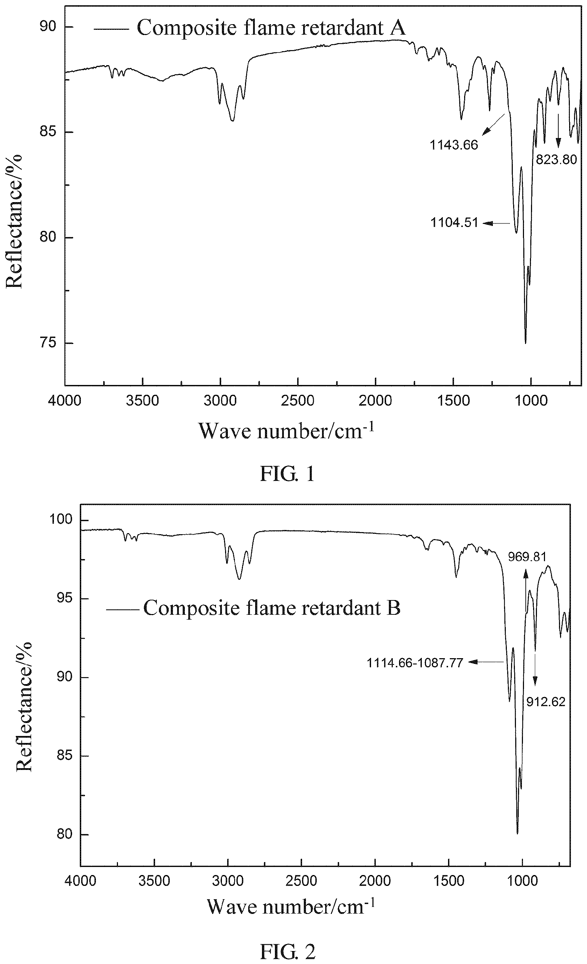

FIG. 1 is an infrared spectrum of the composite flame retardant A provided in this example, where a characteristic peak of stretching vibration of C-O appears at 1143.66 cm⁻¹, a characteristic peak of asymmetric stretching vibration of Si-O appears at 1104.51 cm⁻¹, a characteristic peak of symmetric stretching vibration of Si-O appears at 967.28 cm⁻¹, and a deformation vibration peak of Si-O appears at 823.80 cm⁻¹. It can be seen that the flame-retardant modifier reacted with the flame retardant and the rubber to enhance the bonding between the flame retardant and the rubber, indicating the successful modification of the composite flame retardant A.

According to the formulations shown in Table 1, rubber compounds of vibration-damping rubbers of this example were prepared. A compounding process for vibration-damping rubber products 1# and 2# was as follows: a natural rubber was added into an internal mixer, an active agent was added, and compounding was conducted for 2 min; then carbon black N330, white carbon black, StronWiTM, talcum powder, nano-MMT, GO, aluminum diethyl phosphite, MPP, TOP, and an anti-aging agent were added, and compounding was further conducted at 50°C to 130°C for 8 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for a vibration-damping rubber product 3# of the present disclosure was as follows: a natural rubber and the composite flame retardant A were thoroughly compounded at 50°C to 90°C in an internal mixer; then carbon black N330, white carbon black, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The StronWiTM, talcum powder, nano-MMT, GO, aluminum diethyl phosphite, MPP, and TOP added in the products 1# and 2# are the components other than the flame-retardant modifier in the composite flame retardant of the present disclosure. The variables are balanced by adding these components, such that the products 1# and 2# are in contrast with the product 3# prepared by directly adding the composite flame retardant A. The performance comparison of the rubber compounds obtained from the three formulations can prove the role of the flame-retardant modifier in the composite flame retardant A. Without the flame-retardant modifier, the flame retardant and the rubber cannot be modified and there is weak bonding between the flame retardant and the rubber, which causes poor dispersion of the flame retardant in the crude rubber and unsatisfactory flame retardancy and also proves the improvement effect of the composite flame retardant A on the vibration-damping rubber formulation.

**Table 1 Vibration-damping formulations of natural rubber (parts by mass)**

| | 1# | 2# | 3# |
|---|---|---|---|
| Natural rubber | 100 | 100 | 100 |
| Carbon black N330 | 20 | 15 | 20 |
| White carbon black | 15 | 15 | 15 |
| StronWiTM | 7.5 | 20 | 0 |
| Talcum powder | 5.5 | 12 | 0 |
| Nano-MMT | 11.0 | 25 | 0 |
| GO | 2 | 10 | 0 |
| Aluminum diethyl phosphite | 7.3 | 26 | 0 |
| MPP | 3.7 | 13 | 0 |
| TOP | 4 | 8 | 0 |
| Composite flame retardant A | 0 | 0 | 90 |
| Active agent | 5.5 | 5.5 | 5.5 |
| Anti-aging agent | 5.8 | 5.8 | 5.8 |
| Vulcanizing agent | 1.6 | 1.6 | 1.6 |
| Accelerating agent | 2.5 | 2.5 | 2.5 |

The rubber compounds prepared according to the formulations shown in Table 1 were vulcanized at 150°C for 15 min, and properties of obtained vulcanized rubbers were shown in Table 2. In the composite flame retardant, the rubber and the modifier do not play a flame-retardant role; and the solid flame retardant and the liquid flame retardant play an effective flame-retardant role, namely, StronWiTM, talcum powder, nano-MMT, GO, aluminum diethyl phosphite, MPP, and TOP. It can be seen from Table 1 that the product 1# includes 41 parts of effective flame-retardant components, the product 2# includes 114 parts of effective flame-retardant components, and the 90 parts of composite flame retardant A in the product 3# include 45 parts of effective flame-retardant components. Compared with the product 2#, the product 3# has less effective flame-retardant components, but exhibits better flame retardancy; and the products 1# and 3# have almost the same effective flame-retardant component content, but the product 3# exhibits better flame retardancy. It can be seen that the dispersion of the composite flame retardant A in the natural rubber compound is improved, resulting in a prominent flame-retardant effect. By using the composite flame retardant with a small amount of effective flame-retardant components, the flame retardancy can meet the requirements of EN45545-2 R9 HL2 (*MARHE* ≤ 90 kW/m², *Dₛ* ≤ 600, and *CIT* ≤ 1.8), and the mechanical properties, low-temperature performance, heat generation performance, and fatigue resistance of a vulcanized rubber can be significantly improved, which solves the problem that the vibration-damping formulation of natural rubber cannot give consideration to both the flame retardancy and the functionality.

**Table 2 Properties of vibration-damping vulcanized rubbers obtained from natural rubber**

| | | 1# | 2# | 3# |
|---|---|---|---|---|
| Hardness. Shore A | | 55 | 55 | 54 |
| Tensile strength, MPa | | 16.4 | 13.3 | 21.8 |
| Elongation at break, % | | 537 | 481 | 604 |
| Carbon black dispersion | | 7 | 6 | 10 |
| Brittleness temperature. °C | | -54 | -51 | -65 |
| Temperature rise, °C | | 21.4 | 22.9 | 19.9 |
| Flex life, in ten thousand | Grade 0 | 3.8 | 1.7 | 7.2 |
| | Grade 6 | 8.4 | 6.0 | 16.7 |
| Tensile fatigue (0 mm to 10 mm, 3 Hz), number of failures, in ten | | 8.3 | 6 | 17.4 |
| Compression creep increment, mm/mm | | 0.021 | 0.024 | 0.016 |
| | MARHE, kW/m² | 107 | 89 | 80 |
| Flame retardancy | *D*_{S} | 730 | 530 | 470 |
| | *CIT* | 0.058 | 0.040 | 0.038 |

### Example 2:

A composite flame retardant of the present disclosure was provided, including the following components, in parts by mass: 70 parts of *cis*-polybutadiene rubber, 30 parts of *trans*-poly(butadiene-*co*-isoprene) rubber, 10 parts of double-end triethoxysilylpropyl-functionalized liquid polybutadiene, 25 parts of StronWiTM, 15 parts of talcum powder, 40 parts of nano-MMT, 12 parts of GO, 20 parts of aluminum diethyl phosphite, 10 parts of MPP, and 15 parts of *m*/*p*-CDP.

The composite flame retardant in this example was prepared as follows: the *cis*-polybutadiene rubber and the *trans*-poly(butadiene-*co*-isoprene) rubber were thoroughly compounded at 40°C to 80°C in an internal mixer according to the above mass ratio; then the StronWiTM, talcum powder, nano-MMT, GO, aluminum diethyl phosphite, MPP, *m*/*p*-CDP, and double-end triethoxysilylpropyl-functionalized liquid polybutadiene were added, and compounding was further conducted at 155°C to 165°C for 8 min; and a resulting product was discharged and cooled to obtain the composite flame retardant, which was named composite flame retardant B.

According to the formulations shown in Table 3, rubber compounds of vibration-damping rubbers of this example were prepared. A compounding process for a vibration-damping rubber product 4# was as follows: a natural rubber, a styrene-butadiene rubber, and a *cis*-polybutadiene rubber were added into a closed compounding machine, an active agent was added, and compounding was conducted for 2 min; then carbon black N110, carbon black N330, carbon black N660, StronWiTM, talcum powder, nano-MMT, GO, aluminum diethyl phosphite, MPP, *m*/*p*-CDP, and an anti-aging agent were added, and compounding was further conducted at 50°C to 130°C for 8 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for the vibration-damping rubber product 5# of the present disclosure was as follows: a natural rubber, a styrene-butadiene rubber, a *cis*-polybutadiene rubber, and the composite flame retardant B were thoroughly compounded at 50°C to 90°C in an internal mixer; then carbon black N110, carbon black N330, carbon black N660, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The product 4# serves as a control for the product 5#, which proves the improvement effect of the composite flame retardant B on the vibration-damping rubber formulation and the role of the flame-retardant modifier in the composite flame retardant B.

**Table 3 Vibration-damping formulations of natural rubber/styrene-butadiene rubber/cis-polybutadiene rubber (parts by mass)**

| | 4# | 5# |
|---|---|---|
| Natural rubber | 60 | 60 |
| Styrene-butadiene rubber | 25 | 25 |
| *Cis*-polybutadiene rubber | 15 | 15 |
| Carbon black N110 | 5 | 5 |
| Carbon black N330 | 20 | 20 |
| Carbon black N660 | 15 | 15 |
| Stron WiTM | 10 | 0 |
| Talcum powder | 6 | 0 |
| Nano-MMT | 16 | 0 |
| GO | 5 | 0 |
| Aluminum diethyl phosphite | 8 | 0 |
| MPP | 4 | 0 |
| m/p-CDP | 6 | 0 |
| Composite flame retardant B | 0 | 100 |
| Active agent | 6 | 6 |
| Anti-aging agent | 4 | 4 |
| Vulcanizing agent | 2 | 2 |
| Accelerating agent | 1.5 | 1.5 |

The rubber compounds prepared according to the formulations shown in Table 3 were vulcanized at 150°C for 20 min, and properties of obtained vulcanized rubbers were shown in Table 4. In the composite flame retardant, the rubber and the modifier do not play a flame-retardant role; and the solid flame retardant and the liquid flame retardant (StronWiTM, talcum powder, nano-MMT, GO, aluminum diethyl phosphite, MPP, and *m*/*p-CDP)* play an effective flame-retardant role. The 100 parts of composite flame retardant B in the product 5# include 40.5 parts of rubber, 4 parts of modifier, and 55.5 parts of effective flame-retardant components (the solid flame retardant and the liquid flame retardant to play a flame-retardant role); and the product 4# has 55 parts of solid flame retardant and liquid flame retardant in total. Therefore, the products 4# and 5# have the same amount of effective flame-retardant components. Moreover, the rubber component is not conducive to flame retardancy. The product 5# has more *cis*-polybutadiene rubber and *trans*-poly(butadiene-*co*-isoprene) rubber than the product 4#, but still shows better performance than the product 4#. It can be seen from Table 4 that, under the same amount of effective flame-retardant components, the dispersion of the composite flame retardant B in the natural rubber/styrene-butadiene rubber/cis-polybutadiene rubber compound is improved to achieve a prominent flame-retardant effect, the flame retardancy can meet the requirements of EN45545-2 R9 HL2, and the mechanical properties, low-temperature performance, heat generation performance, and fatigue resistance of a vulcanized rubber can be significantly improved, which solves the problem that the vibration-damping formulation of natural rubber/styrene-butadiene rubber/cis-polybutadiene rubber cannot give consideration to both the flame retardancy and the functionality.

**Table 4 Properties of vibration-damping vulcanized rubbers obtained from natural rubber/styrene-butadiene rubber/cis-polybutadiene rubber**

| | | 4# | 5# |
|---|---|---|---|
| Hardness. Shore A | | 60 | 58 |
| Tensile strength, MPa | | 13.6 | 19.7 |
| Elongation at break, % | | 473 | 509 |
| Carbon black dispersion | | 6 | 10 |
| Brittleness temperature. °C | | -53 | -65 |
| Temperature rise, °C | | 26.1 | 24.3 |
| Flex life, in ten thousand | Grade 0 | 3.5 | 7.6 |
| | Grade 6 | 8.2 | 18.6 |
| Tensile fatigue (0 mm to 10 mm, 3 Hz), number of failures, in ten thousand | | 8.4 | 16.2 |
| Compression creep increment, mm/mm | | 0.027 | 0.020 |
| | MARHE, kW/m² | 103 | 85 |
| Flame retardancy | *D*_{S} | 780 | 530 |
| | *CIT* | 0.1525 | 0.0560 |

### Example 3:

A composite flame retardant of the present disclosure was provided, including the following components, in parts by mass: 75 parts of *cis*-polybutadiene rubber, 25 parts of *trans*-poly(butadiene-*co*-isoprene) rubber, 9 parts of triethoxysilylpropyl-trifunctionalized liquid polybutadiene, 30 parts of StronWiTM, 50 parts of nano-MMT, 15 parts of POSS, 16.6 parts of aluminum diethyl phosphite, 8.3 parts of MPP, and 12 parts of tetrabromophthalic anhydride.

The composite flame retardant in this example was prepared as follows: the *cis*-polybutadiene rubber and the *trans*-poly(butadiene-*co*-isoprene) rubber were thoroughly compounded at 40°C to 80°C in an internal mixer according to the above mass ratio; then the StronWiTM, nano-MMT, POSS, aluminum diethyl phosphite, MPP, tetrabromophthalic anhydride, and triethoxysilylpropyl-trifunctionalized liquid polybutadiene were added, and compounding was further conducted at 150°C to 160°C for 10 min; and a resulting product was discharged and cooled to obtain the composite flame retardant, which was named composite flame retardant C.

According to the formulations shown in Table 5, rubber compounds of vibration-damping rubbers of this example were prepared. A compounding process for a vibration-damping rubber product 6# was as follows: an isoprene rubber was added into an internal mixer, an active agent was added, and compounding was conducted for 2 min; then carbon black N550, white carbon black, StronWiTM, nano-MMT, POSS, aluminum diethyl phosphite, MPP, tetrabromophthalic anhydride, and an anti-aging agent were added, and compounding was further conducted at 50°C to 130°C for 7 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for a vibration-damping rubber product 7# of the present disclosure was as follows: an isoprene rubber and the composite flame retardant C were thoroughly compounded at 50°C to 90°C in an internal mixer; then carbon black N550, white carbon black, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The product 6# serves as a control for the product 7#, which proves the improvement effect of the composite flame retardant C on the vibration-damping rubber formulation and the role of the flame-retardant modifier in the composite flame retardant C.

**Table 5 Vibration-damping formulations of isoprene rubber (parts by mass)**

| | 6# | 7# |
|---|---|---|
| Isoprene rubber | 100 | 100 |
| Carbon black N550 | 20 | 20 |
| White carbon black | 20 | 20 |
| Stron WiTM | 12.4 | 0 |
| Nano-MMT | 20.6 | 0 |
| POSS | 6 | 0 |
| Aluminum diethyl phosphite | 7.3 | 0 |
| MPP | 3.7 | 0 |
| Tetrabromophthalic anhydride | 5 | 0 |
| Composite flame retardant C | 0 | 100 |
| Active agent | 5 | 5 |
| Anti-aging agent | 4.5 | 4.5 |
| Vulcanizing agent | 2 | 2 |
| Accelerating agent | 2.4 | 2.4 |

The rubber compounds prepared according to the formulations shown in Table 5 were vulcanized at 150°C for 15 min, and properties of obtained vulcanized rubbers were shown in Table 6. It can be seen from Table 6 that, in the composite flame retardant, the rubber and the modifier do not play a flame-retardant role, and the solid flame retardant and the liquid flame retardant (StronWiTM, nano-MMT, POSS, aluminum diethyl phosphite, MPP, and tetrabromophthalic anhydride) play an effective flame-retardant role; the product 6# has 55 parts of solid flame retardant and liquid flame retardant in total; and the 100 parts of composite flame retardant C in the product 7# include 40.5 parts of rubber, 4 parts of modifier, and 54.7 parts of effective flame-retardant components (the solid flame retardant and the liquid flame retardant to play a flame-retardant role). Therefore, the products 6# and 7# can be considered to have the same amount of effective flame-retardant components. Under the same amount of effective flame-retardant components, the dispersion of the composite flame retardant C in the isoprene rubber compound is improved to achieve a prominent flame-retardant effect, the flame retardancy can meet the requirements of EN45545-2 R9 HL2, and the mechanical properties, low-temperature performance, heat generation performance, and fatigue resistance of a vulcanized rubber can be significantly improved, which solves the problem that the vibration-damping formulation of isoprene rubber cannot give consideration to both the flame retardancy and the functionality.

**Table 6 Properties of vibration-damping vulcanized rubbers obtained from isoprene rubber**

| | | 6# | 7# |
|---|---|---|---|
| Hardness. Shore A | | 56 | 57 |
| Tensile strength, MPa | | 14.2 | 20.4 |
| Elongation at break, % | | 468 | 568 |
| Carbon black dispersion | | 7 | 10 |
| Brittleness temperature. °C | | -53 | -62 |
| Temperature rise, °C | | 22.2 | 20.8 |
| Flex life, in ten thousand | Grade 0 | 2.4 | 6.6 |
| | Grade 6 | 6.6 | 16.1 |
| Tensile fatigue (0 mm to 10 mm, 3 Hz), number of failures, in ten thousand | | 7 | 14.6 |
| Compression creep increment, mm/mm | | 0.020 | 0.014 |
| | MARHE, kW/m² | 105 | 82 |
| Flame retardancy | *D*_{S} | 750 | 520 |
| | *CIT* | 0.1654 | 0.0664 |

### Example 4:

A composite flame retardant of the present disclosure was provided, including the following components, in parts by mass: 80 parts of *cis*-polybutadiene rubber, 20 parts of *trans*-poly(butadiene-*co*-isoprene) rubber, 6 parts of epoxidized liquid polybutadiene, 25 parts of talcum powder, 50 parts of nano-MMT, 10 parts of GO, 13.3 parts of aluminum diethyl phosphite, 6.7 parts of MPP, and 20 parts of *m*/*p*-CDP.

The composite flame retardant in this example was prepared as follows: the *cis*-polybutadiene rubber and the *trans*-poly(butadiene-*co*-isoprene) rubber were thoroughly compounded at 40°C to 80°C in an internal mixer according to the above mass ratio; then the talcum powder, nano-MMT, GO, aluminum diethyl phosphite, MPP, *m*/*p*-CDP, and epoxidized liquid polybutadiene were added, and compounding was further conducted at 145°C to 155°C for 12 min; and a resulting product was discharged and cooled to obtain the composite flame retardant, which was named composite flame retardant D.

FIG. 2 is an infrared spectrum of the composite flame retardant D provided in this example, where a characteristic peak of asymmetric stretching vibration of Si-O-C appears at 1114.66 cm⁻¹ to 1087.77 cm⁻¹, a characteristic peak of symmetric stretching vibration of Si-O-C appears at 969.81 cm⁻¹, and a vibration peak of epoxy appears at 912.62 cm⁻¹. The Si-O-C characteristic peaks are formed due to a reaction of epoxy groups in the modifier with the silicate flame retardant in the solid flame retardant. It can be seen that the flame-retardant modifier reacted with the flame retardant and the rubber to enhance the bonding between the flame retardant and the rubber, indicating the successful modification of the composite flame retardant D.

According to the formulations shown in Table 7, rubber compounds of vibration-damping rubbers of this example were prepared. A compounding process for a vibration-damping rubber product 8# was as follows: an ethylene-propylene-diene terpolymer rubber (EPDM) was added into an internal mixer, an active agent was added, and compounding was conducted for 2 min; then carbon black N234, gas channel black, carbon black N990, talcum powder, nano-MMT, GO, aluminum diethyl phosphite, MPP, *m*/*p*-CDP, and an anti-aging agent were added, and compounding was further conducted at 50°C to 130°C for 6min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for a vibration-damping rubber product 9# of the present disclosure was as follows: an EPDM and the composite flame retardant D were thoroughly compounded at 50°C to 90°C in an internal mixer; then carbon black N234, gas channel black, carbon black N990, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The product 8# serves as a control for the product 9#, which proves the improvement effect of the composite flame retardant D on the vibration-damping rubber formulation and the role of the flame-retardant modifier in the composite flame retardant D.

**Table 7 Vibration-damping formulations of EPDM (parts by mass)**

| | 8# | 9# |
|---|---|---|
| EPDM | 100 | 100 |
| Carbon black N234 | 20 | 20 |
| Gas channel black | 10 | 10 |
| Carbon black N990 | 15 | 15 |
| Talcum powder | 10 | 0 |
| Nano-MMT | 21 | 0 |
| GO | 4 | 0 |
| Aluminum diethyl phosphite | 5.4 | 0 |
| MPP | 2.7 | 0 |
| *m*/*p*-CDP | 8 | 0 |
| Composite flame retardant D | 0 | 95 |
| Active agent | 6 | 6 |
| Anti-aging agent | 1 | 1 |
| Vulcanizing agent | 3 | 3 |
| Accelerating agent | 1.5 | 1.5 |

The rubber compounds prepared according to the formulations shown in Table 7 were vulcanized at 160°C for 20min, and properties of obtained vulcanized rubbers were shown in Table 8. It can be seen from Table 8 that, in the composite flame retardant, the rubber and the modifier do not play a flame-retardant role, and the solid flame retardant and the liquid flame retardant (talcum powder, nano-MMT, GO, aluminum diethyl phosphite, MPP, and *m*/*p-CDP)* play an effective flame-retardant role; the product 8# has 51.1 parts of solid flame retardant and liquid flame retardant in total; and the 95 parts of composite flame retardant D in the product 9# include 51.4 parts of effective flame-retardant components (the solid flame retardant and the liquid flame retardant to play a flame-retardant role). Therefore, the products 8# and 9# can be considered to have the same amount of effective flame-retardant components. Under the same amount of effective flame-retardant components, the dispersion of the composite flame retardant D in the EPDM compound is improved to achieve a prominent flame-retardant effect, the flame retardancy can meet the requirements of EN45545-2 R9 HL2, and the mechanical properties, low-temperature performance, heat generation performance, and fatigue resistance of a vulcanized rubber can be significantly improved, which solves the problem that the vibration-damping formulation of EPDM cannot give consideration to both the flame retardancy and the functionality.

**Table 8 Properties of vibration-damping vulcanized rubbers obtained from EPDM**

| | | 8# | 9# |
|---|---|---|---|
| Hardness. Shore A | | 64 | 62 |
| Tensile strength, MPa | | 15.5 | 17.4 |
| Elongation at break, % | | 576 | 610 |
| Carbon black dispersion | | 6 | 9 |
| Brittleness temperature. °C | | -51 | -58 |
| Temperature rise, °C | | 25.8 | 23.2 |
| Flex life, in ten thousand | Grade 0 | 6.5 | 11.6 |
| | Grade 6 | 14.4 | 25.3 |
| Tensile fatigue (0 mm to 10 mm, 3 Hz), number of failures, in ten thousand | | 10 | 19.4 |
| | MARHE, kW/m² | 113 | 86 |
| Flame retardancy | *D_{S},* | 820 | 530 |
| | *CIT* | 0.1832 | 0.0724 |

### Example 5:

A composite flame retardant of the present disclosure was provided, including the following components, in parts by mass: 85 parts of *cis*-polybutadiene rubber, 15 parts of *trans*-poly(butadiene-*co*-isoprene) rubber, 9 parts of double-end isocyanate-functionalized liquid polybutadiene, 10 parts of StronWiTM, 25 parts of nano-MMT, 11 parts of POSS, 10 parts of aluminum diethyl phosphite, 5 parts of MPP, and 5 parts of TOP.

The composite flame retardant in this example was prepared as follows: the *cis*-polybutadiene rubber and the *trans*-poly(butadiene-*co*-isoprene) rubber were thoroughly compounded at 40°C to 80°C in a closed compounding machine according to the above mass ratio; then the StronWiTM, nano-MMT, POSS, aluminum diethyl phosphite, MPP, TOP, and double-end isocyanate-functionalized liquid polybutadiene were added, and compounding was further conducted at 140°C to 150°C for 15 min; and a resulting product was discharged and cooled to obtain the composite flame retardant, which was named composite flame retardant E.

According to the formulations shown in Table 9, rubber compounds of vibration-damping rubbers of this example were prepared. A compounding process for a vibration-damping rubber product 10# was as follows: a chloroprene rubber and a chlorohydrin rubber were added into an internal mixer, an active agent was added, and compounding was conducted for 2 min; then carbon black N330, carbon black N880, white carbon black, StronWiTM, nano-MMT, POSS, aluminum diethyl phosphite, MPP, TOP, and an anti-aging agent were added, and compounding was further conducted at 50°C to 130°C for 7 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for a vibration-damping rubber product 11# of the present disclosure was as follows: a chloroprene rubber, a chlorohydrin rubber, and the composite flame retardant E were thoroughly compounded at 50°C to 90°C in an internal mixer; then carbon black N330, carbon black N880, white carbon black, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The product 10# serves as a control for the product 11#, which proves the improvement effect of the composite flame retardant E on the vibration-damping rubber formulation and the role of the flame-retardant modifier in the composite flame retardant E.

**Table 9 Vibration-damping formulations of chloroprene rubber/chlorohydrin rubber (parts by mass)**

| | 10# | 11# |
|---|---|---|
| Chloroprene rubber | 70 | 70 |
| Chlorohydrin rubber | 30 | 30 |
| Carbon black N330 | 25 | 25 |
| Carbon black N880 | 10 | 10 |
| White carbon black | 10 | 10 |
| StronWiTM | 3.4 | 0 |
| Nano-MMT | 8.6 | 0 |
| POSS | 4 | 0 |
| Aluminum diethyl phosphite | 3.3 | 0 |
| MPP | 1.7 | 0 |
| TOP | 2 | 0 |
| Composite flame retardant E | 0 | 60 |
| Active agent | 1 | 1 |
| Anti-aging agent | 3.5 | 3.5 |
| Vulcanizing agent | 8 | 8 |
| Accelerating agent | 1.5 | 1.5 |

The rubber compounds prepared according to the formulations shown in Table 9 were vulcanized at 150°C for 30min, and properties of obtained vulcanized rubbers were shown in Table 10. It can be seen from Table 10 that, in the composite flame retardant, the rubber and the modifier do not play a flame-retardant role, and the solid flame retardant and the liquid flame retardant (StronWiTM, nano-MMT, POSS, aluminum diethyl phosphite, MPP, and TOP) play an effective flame-retardant role; the product 10# has 23 parts of solid flame retardant and liquid flame retardant in total; and the 60 parts of composite flame retardant E in the product 11# include 22.5 parts of effective flame-retardant components. Therefore, the products 10# and 11# can be considered to have the same amount of effective flame-retardant components. Under the same amount of effective flame-retardant components, the dispersion of the composite flame retardant E in the chloroprene rubber/chlorohydrin rubber compound is improved to achieve a prominent flame-retardant effect, the flame retardancy can meet the requirements of EN45545-2 R9 HL2, and the mechanical properties, low-temperature performance, heat generation performance, and fatigue resistance of a vulcanized rubber can be significantly improved, which solves the problem that the vibration-damping formulation of chloroprene rubber/chlorohydrin rubber cannot give consideration to both the flame retardancy and the functionality.

**Table 10 Properties of vibration-damping vulcanized rubbers obtained from chloroprene rubber/chlorohydrin rubber**

| | | 10# | 11# |
|---|---|---|---|
| Hardness. Shore A | | 56 | 55 |
| Tensile strength, MPa | | 13.4 | 16.7 |
| Elongation at break, % | | 448 | 497 |
| Carbon black dispersion | | 5 | 9 |
| Brittleness temperature. °C | | -41 | -47 |
| Temperature rise. °C | | 27.4 | 25.8 |
| Flex life, in ten thousand | Grade 0 | 14.6 | 26.4 |
| | Grade 6 | 37.8 | 46.7 |
| Tensile fatigue (0 mm to 10 mm. 3 Hz), number of failures, in ten thousand | | 15.3 | 27.1 |
| Flame retardancy | MARHE, kW/m² | 49.4 | 26.9 |
| | *D*_{S} | 870 | 560 |
| | *CIT* | 0.9604 | 0.6823 |

### Example 6:

A composite flame retardant of the present disclosure was provided, including the following components, in parts by mass: 90 parts of *cis*-polybutadiene rubber, 10 parts of *trans*-poly(butadiene-*co*-isoprene) rubber, 14 parts of single-end triethoxysilylpropyl-functionalized liquid polybutadiene, 20 parts of StronWiTM, 20 parts of talcum powder, 40 parts of nano-MMT, 7 parts of POSS, 6.6 parts of aluminum diethyl phosphite, 3.7 parts of MPP, and 9 parts of tetrabromophthalic anhydride.

The composite flame retardant in this example was prepared as follows: the *cis*-polybutadiene rubber and the *trans*-poly(butadiene-*co*-isoprene) rubber were thoroughly compounded at 40°C to 80°C in an internal mixer according to the above mass ratio; then the StronWiTM, talcum powder, nano-MMT, POSS, aluminum diethyl phosphite, MPP, tetrabromophthalic anhydride, and single-end triethoxysilylpropyl-functionalized liquid polybutadiene were added, and compounding was further conducted at 135°C to 145°C for 20 min; and a resulting product was discharged and cooled to obtain the composite flame retardant, which was named composite flame retardant F.

According to the formulations shown in Table 11, rubber compounds of vibration-damping rubbers of this example were prepared. A compounding process for a vibration-damping rubber product 12# was as follows: a butyronitrile rubber was added into an internal mixer, an active agent was added, and compounding was conducted for 2 min; then carbon black N440, channel replacement furnace black S315, StronWiTM, talcum powder, nano-MMT, POSS, aluminum diethyl phosphite, MPP, tetrabromophthalic anhydride, and an anti-aging agent were added, and compounding was further conducted at 50°C to 130°C for 8 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for a vibration-damping rubber product 13# of the present disclosure was as follows: a butyronitrile rubber and the composite flame retardant F were thoroughly compounded at 50°C to 90°C in an internal mixer; then carbon black N440, channel replacement furnace black S315, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The product 12# serves as a control for the product 13#, which proves the improvement effect of the composite flame retardant F on the vibration-damping rubber formulation and the role of the flame-retardant modifier in the composite flame retardant F.

**Table 11 Vibration-damping formulations of butyronitrile rubber (parts by mass)**

| | 12# | 13# |
|---|---|---|
| Butyronitrile rubber | 100 | 100 |
| Carbon black N440 | 40 | 40 |
| Channel replacement furnace | 5 | 5 |
| StronWiTM | 7.8 | 0 |
| Talcum powder | 7.8 | 0 |
| Nano-MMT | 15.4 | 0 |
| GO | 3 | 0 |
| Aluminum diethyl phosphite | 2.6 | 0 |
| MPP | 1.4 | 0 |
| Tetrabromophthalic anhydride | 3 | 0 |
| Composite flame retardant F | 0 | 85 |
| Active agent | 6 | 6 |
| Anti-aging agent | 2 | 2 |
| Vulcanizing agent | 2.2 | 2.2 |
| Accelerating agent | 1 | 1 |

The rubber compounds prepared according to the formulations shown in Table 11 were vulcanized at 160°C for 15 min, and properties of obtained vulcanized rubbers were shown in Table 12. It can be seen from Table 12 that, in the composite flame retardant, the rubber and the modifier do not play a flame-retardant role, and the solid flame retardant and the liquid flame retardant (StronWiTM, talcum powder, nano-MMT, POSS, aluminum diethyl phosphite, MPP, and tetrabromophthalic anhydride) play an effective flame-retardant role; the product 12# has 41 parts of solid flame retardant and liquid flame retardant in total; and the 85 parts of composite flame retardant F in the product 13# include 40.9 parts of effective flame-retardant components. Therefore, the products 12# and 13# can be considered to have the same amount of effective flame-retardant components. Under the same amount of effective flame-retardant components, the dispersion of the composite flame retardant F in the butyronitrile rubber compound is improved to achieve a prominent flame-retardant effect, the flame retardancy can meet the requirements of EN45545-2 R9 HL2, and the mechanical properties, low-temperature performance, heat generation performance, and fatigue resistance of a vulcanized rubber can be significantly improved, which solves the problem that the vibration-damping formulation of butyronitrile rubber cannot give consideration to both the flame retardancy and the functionality.

**Table 12 Properties of vibration-damping vulcanized rubbers obtained from butyronitrile rubber**

| | | 12# | 13# |
|---|---|---|---|
| Hardness. Shore A | | 60 | 59 |
| Tensile strength, MPa | | 13.3 | 16.6 |
| Elongation at break, % | | 528 | 581 |
| Carbon black dispersion | | 5 | 8 |
| Brittleness temperature. °C | | -42 | -48 |
| Temperature rise, °C | | 26.2 | 23.8 |
| Flex life, in ten thousand | Grade 0 | 4.3 | 10.2 |
| | Grade 6 | 9.2 | 24.1 |
| Tensile fatigue (0 mm to 10 mm, 3 Hz), number of failures, in ten thousand | | 8.2 | 16.9 |
| Flame retardancy | MARHE, kW/m² | 109 | 77 |
| | *D*_{S}*,* | 790 | 530 |
| | *CIT* | 0.7474 | 0.4318 |

### Example 7:

A composite flame retardant of the present disclosure was provided, including the following components, in parts by mass: 80 parts of *cis*-polybutadiene rubber, 20 parts of *trans*-poly(butadiene-*co*-isoprene) rubber, 10 parts of double-end isocyanate-functionalized liquid polybutadiene, 25 parts of talcum powder, 50 parts of nano-MMT, 9 parts of GO, 15 parts of aluminum diethyl phosphite, 6.8 parts of MPP, and 11 parts of *m*/*p*-CDP.

The composite flame retardant in this example was prepared as follows: the *cis*-polybutadiene rubber and the *trans*-poly(butadiene-*co*-isoprene) rubber were thoroughly compounded at 40°C to 80°C in an internal mixer according to the above mass ratio; then the talcum powder, nano-MMT, GO, aluminum diethyl phosphite, MPP, *mlp-*CDP*,* and double-end isocyanate-functionalized liquid polybutadiene were added, and compounding was further conducted at 130°C to 140°C for 25 min; and a resulting product was discharged and cooled to obtain the composite flame retardant, which was named composite flame retardant G

According to the formulations shown in Table 13, rubber compounds of vibration-damping rubbers of this example were prepared. A compounding process for a vibration-damping rubber product 14# was as follows: a butyl rubber was added into an internal mixer, an active agent was added, and compounding was conducted for 2 min; then gas-mixure carbon black, N774, talcum powder, nano-MMT, GO, aluminum diethyl phosphite, MPP, *m*/*p*-CDP, and an anti-aging agent were added, and compounding was further conducted at 50°C to 130°C for 6 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

A compounding process for a vibration-damping rubber product 1 5# of the present disclosure was as follows: a butyl rubber and the composite flame retardant G were thoroughly compounded at 50°C to 90°C in an internal mixer; then gas-mixure carbon black, N774, an active agent, and an anti-aging agent were added, and compounding was further conducted at 50°C to 130°C for 3 min; a resulting mixture was cooled to 50°C to 60°C, then an accelerating agent and a vulcanizing agent were added, and compounding was further conducted at 50°C to 100°C for 2 min to 3 min; and a resulting rubber was discharged.

The product 14# serves as a control for the product 15#, which proves the improvement effect of the composite flame retardant G on the vibration-damping rubber formulation and the role of the flame-retardant modifier in the composite flame retardant G

**Table 13 Vibration-damping formulations of butyl rubber (parts by mass)**

| | 14# | 15# |
|---|---|---|
| Butyl rubber | 100 | 100 |
| Gas-mixture carbon black | 35 | 35 |
| Carbon black N774 | 10 | 10 |
| Talcum powder | 10 | 0 |
| Nano-MMT | 20 | 0 |
| POSS | 3 | 0 |
| Aluminum diethyl phosphite | 6 | 0 |
| MPP | 2.7 | 0 |
| *m*/*p-*CDP | 4 | 0 |
| Composite flame retardant G | 0 | 90 |
| Active agent | 1.5 | 1.5 |
| Anti-aging agent | 1 | 1 |
| Vulcanizing agent | 6 | 6 |
| Accelerating agent | 2.8 | 2.8 |

The rubber compounds prepared according to the formulations shown in Table 13 were vulcanized at 150°C for 20 min, and properties of obtained vulcanized rubbers were shown in Table 14. It can be seen from Table 14 that, in the composite flame retardant, the rubber and the modifier do not play a flame-retardant role, and the solid flame retardant and the liquid flame retardant (talcum powder, nano-MMT, GO, aluminum diethyl phosphite, MPP, and *m*/*p-*CDP) play an effective flame-retardant role; the product 14# has 45.7 parts of solid flame retardant and liquid flame retardant in total; and the 90 parts of composite flame retardant G in the product 15# include 46.3 parts of effective flame-retardant components. Therefore, the products 14# and 15# can be considered to have the same amount of effective flame-retardant components. Under the same amount of effective flame-retardant components, the dispersion of the composite flame retardant G in the butyl rubber compound is improved to achieve a prominent flame-retardant effect, the flame retardancy can meet the requirements of EN45545-2 R9 HL2, and the mechanical properties, low-temperature performance, heat generation performance, and fatigue resistance of a vulcanized rubber can be significantly improved, which solves the problem that the vibration-damping formulation of butyl rubber cannot give consideration to both the flame retardancy and the functionality.

**Table 14 Properties of vibration-damping vulcanized rubbers obtained from butyl rubber**

| | | 14# | 15# |
|---|---|---|---|
| Hardness. Shore A | | 58 | 57 |
| Tensile strength, MPa | | 8.1 | 11.2 |
| Elongation at break, % | | 523 | 544 |
| Carbon black dispersion | | 5 | 8 |
| Brittleness temperature. °C | | -39 | -44 |
| Temperature rise, °C | | 31.8 | 30.2 |
| Flex life, in ten thousand | Grade 0 | 9.9 | 20.3 |
| | Grade 6 | 37.6 | 48.6 |
| Tensile fatigue (0 mm to 10 mm, 3 Hz), number of failures, in ten thousand | | 11.2 | 21.7 |
| | MARHE, kW/m² | 117 | 87 |
| Flame retardancy | *D*_{S} | 830 | 540 |
| *CIT* | | 0.3145 | 0.0691 |

It can be seen from the above examples and comparative examples that, in the composite flame retardant including a rubber, a flame-retardant modifier, a solid flame retardant, and a liquid flame retardant provided by the present disclosure, a "bridge bond" can be established between the flame retardant and the rubber to enhance the bonding between the flame retardant and the rubber and improve the dispersion of the flame retardant in the rubber matrix, thereby fully realizing the flame-retardant effect of the flame retardant for the rubber and significantly improving the mechanical properties, low-temperature performance, heat generation performance, and fatigue resistance of a flame-retardant vibration-damping rubber compound.

The above are only preferred examples of the present disclosure and are not intended to limit the present disclosure in any way. Therefore, any simple modifications and equivalent changes made to the above examples in accordance with the technical essence of the present disclosure without departing from the contents of the technical solutions of the present disclosure should fall within the protection scope of the technical solutions of the present disclosure.

## Claims

1. A composite flame retardant, wherein main components of the composite flame retardant comprise a rubber, a solid flame retardant, and a liquid flame retardant; the composite flame retardant further comprises a flame-retardant modifier; the flame-retardant modifier is a diene-based liquid rubber containing one or more functional groups from the group consisting of an isocyanate group, an epoxy group, and a trialkoxysilylpropyl group; and the diene-based liquid rubber comprises at least one from the group consisting of a butadiene-based rubber, a chlorobutadiene-based rubber, an isoprene-based rubber, a 1,3-piperlene-based rubber, and a cyclopentadiene-based rubber.

2. The composite flame retardant according to claim 1, wherein the flame-retardant modifier comprises at least one from the group consisting of single-end triethoxysilylpropyl-functionalized liquid polybutadiene, double-end triethoxysilylpropyl-functionalized liquid polybutadiene, triethoxysilylpropyl-trifunctionalized liquid polybutadiene, epoxidized liquid polybutadiene, and double-end isocyanate-functionalized liquid polybutadiene.

3. The composite flame retardant according to claim 1, wherein the rubber comprises a *cis*-polybutadiene rubber and/or a *trans*-poly(butadiene-*co*-isoprene) rubber.

4. The composite flame retardant according to claim 3, wherein the rubber comprises a *cis*-polybutadiene rubber and a *trans*-poly(butadiene-*co*-isoprene) rubber, and a mass ratio of the *cis*-polybutadiene rubber to the *trans*-poly(butadiene-*co*-isoprene) rubber is (60-95):(5-40).

5. The composite flame retardant according to any one of claims 1 to 4, wherein the solid flame retardant comprises at least one from the group consisting of a smoke suppressant, a char-forming agent, and a nitrogen-phosphorous flame retardant; the smoke suppressant is a silicate, comprising at least one from the group consisting of StronWiTM, talcum powder, and nano-montmorillonite (MMT); the char-forming agent comprises polyhedral oligomeric silsesquioxane (POSS) and/or graphene oxide (GO); and the nitrogen-phosphorous flame retardant comprises aluminum diethyl phosphite and/or melamine pyrophosphate (MPP).

6. The composite flame retardant according to claim 5, wherein the solid flame retardant comprises a smoke suppressant, a char-forming agent, and a nitrogen-phosphorous flame retardant.

7. The composite flame retardant according to claim 6, wherein a mass ratio of the smoke suppressant to the rubber is (5-100):100; a mass ratio of the char-forming agent to the rubber is (2-20):100; and a mass ratio of the nitrogen-phosphorous flame retardant to the rubber is (5-40):100.

8. The composite flame retardant according to claim 6, wherein the nitrogen-phosphorous flame retardant comprises aluminum diethyl phosphite and MPP, and a mass ratio of the aluminum diethyl phosphite to the MPP is (1.8-2.2):1.

9. The composite flame retardant according to any one of claims 1 to 4, wherein the liquid flame retardant comprises at least one from the group consisting of trioctyl phosphate (TOP), tetrabromophthalic anhydride, and *mlp*-cresyl diphenyl phosphate (CDP).

10. The composite flame retardant according to any one of claims 1 to 4, wherein a mass ratio of the solid flame retardant to the rubber is (12-160):100, and a mass ratio of the liquid flame retardant to the rubber is (1-30):100.

11. The composite flame retardant according to any one of claims 1 to 4, wherein a mass ratio of the flame-retardant modifier to the solid flame retardant is (1-25):100.

12. A preparation method of the composite flame retardant according to any one of claims 1 to 11, comprising: adding the solid flame retardant, the liquid flame retardant, and the flame-retardant modifier to the rubber, and subjecting a resulting mixture to high-temperature compounding at 130°C to 170°C for 2 min to 30 min.

13. A flame-retardant vibration-damping rubber with excellent comprehensive performance, wherein a formulation of the flame-retardant vibration-damping rubber comprises a crude rubber, the composite flame retardant according to any one of claims 1 to 11, a reinforcing filler, an active agent, an anti-aging agent, an accelerating agent, and a vulcanizing agent;
the crude rubber comprises a natural rubber, a styrene-butadiene rubber, a butadiene rubber, an isoprene rubber, an ethylene-propylene rubber, a chloroprene rubber, a butyronitrile rubber, a butyl rubber, a silicone rubber, a fluoro rubber, a polyurethane rubber, a chlorohydrin rubber, a polysulfide rubber, an acrylate rubber, a reclaimed rubber, or a combined rubber thereof in different proportions; and the reinforcing filler comprises carbon black and/or white carbon black.

14. The flame-retardant vibration-damping rubber according to claim 13, wherein a mass ratio of the composite flame retardant to the crude rubber is (40-120):100, and a mass ratio of the reinforcing filler to the crude rubber is (2-50): 100.

15. A preparation method of the flame-retardant vibration-damping rubber according to claim 13 or 14, comprising: subjecting the crude rubber and the composite flame retardant to first compounding; adding the reinforcing filler, the active agent, and the anti-aging agent, and conducting second compounding; and cooling, adding the accelerating agent and the vulcanizing agent, and conducting third compounding to obtain the flame-retardant vibration-damping rubber.

16. The preparation method of the flame-retardant vibration-damping rubber according to claim 15, comprising the following steps:
(1) adding the rubber and the composite flame retardant to a compounding machine, and compounding at 50°C to 90°C;
(2) adding the reinforcing filler, the active agent, and the anti-aging agent, and further compounding at 50°C to 130°C; and
(3) cooling a rubber compound to 50°C to 60°C, adding the accelerating agent and the vulcanizing agent and compounding at 50°C to 100°C, and discharging the rubber.
